## Europäisches Patentamt

## European Patent Office

## Office européen des brevets

(11) Veröffentlichungsnummer: **0 008 095**
B1

(12) **EUROPÄISCHE PATENTSCHRIFT**

(45) Veröffentlichungstag der Patentschrift:
09.02.83

(51) Int. Cl.³: **G 03 D 3/06,** G 03 D 5/06,
G 01 F 23/24

(21) Anmeldenummer: 79102804.6

(22) Anmeldetag: 04.08.79

(54) **Entwicklerstation für Zweikomponenten -Diazotypiematerial.**

(30) Priorität: 12.08.78 DE 2835413

(43) Veröffentlichungstag der Anmeldung:
20.02.80 Patentblatt 80/4

(45) Bekanntmachung des Hinweises auf die Patenterteilung:
09.02.83 Patentblatt 83/6

(84) Benannte Vertragsstaaten:
DE FR GB NL

(56) Entgegenhaltungen:
US-A-2 483 967
US-A-2 787 756
US-A-3 068 886
US-A-3 119 266
US-A-3 339 411
US-A-3 461 722
US-A-3 580 158
US-A-3 605 798
ELEKTROTECHNISCHE ZEITSCHRIFT E.T.Z.,
Ausgabe B, Vol. 26, Nr. 18, 23. August 1974, Seiten
457—459, Berlin, DE. H. BACHMANN: »Elektroden steuern Flüssigkeitsniveau«

(73) Patentinhaber: HOECHST AKTIENGESELLSCHAFT,
Postfach 80 03 20, D-6230 Frankfurt/Main 80 (DE)

(72) Erfinder: Junghanns, Martin, Rösengarten 20,
D-6233 Kelkheim/Ts. (DE)

Entwicklerstation für Zweikomponenten-Diazotypiematerial

Die Erfindung betrifft eine Entwicklerstation für Zweikomponenten-Diazotypiematerial, das nach dem Halbfeuchtverfahren entwickelt wird, mit einer Vorrichtung zur elektrischen Überwachung des Entwicklerlösungsstandes in einem Vorratsbehälter, mit zumindest zwei Elektroden innerhalb des Vorratsbehälters, welche je eine wirksame Kontaktfläche aufweisen, von denen zumindest eine auf einer einen Signal- und/oder Steuervorgang auslösenden Höhe des Entwicklerniveaus liegt und die mit der anderen Elektrode, die eine Bezugselektrode ist, ein Schaltelement bildet, das an eine elektrische Schaltungsanordnung angeschlossen ist und zusammen mit dieser die Betätigung optischer Überwachungselemente und das Steuern von Teilen der Entwicklerstation auslöst.

In Lichtpausmaschinen mit nach dem Halbfeuchtverfahren arbeitenden Entwicklerstationen werden zum Antrag der Entwicklerlösung an das blattförmige Zweikomponenten-Diazotypiematerial Walzenantragswerke mit einer Einrichtung zur Entwicklerlösungsversorgung eingesetzt. Das Walzenantragswerk umfaßt insbesondere eine Antragswalze, eine Preßwalze, sowie eine Preßrolle, welche die Preßwalze an die Antragswalze drückt.

In derartigen Walzenantragswerken besteht das Problem, daß die Antragswalze, die üblicherweise mit einem Gummiüberzug versehen ist, eine verhältnismäßig empfindliche Oberfläche aufweist, bei deren Beschädigung ein gleichmäßiges Entwicklungsergebnis gefährdet ist. Deswegen muß insbesondere ein Trockenlauf der Antragswalze unter Druckbelastung durch die Preßwalze und die Preßrolle vermieden werden. Anderenfalls tritt an der Antragswalze ein plötzlicher starker Anstieg der Reib- und Walkkräfte ein, was zu einer Beschädigung oder gar Zerstörung der Oberfläche der Antragswalze führen kann. Deswegen muß ein Mangel an Entwicklerlösung, die an die Antragswalze angetragen wird, unbedingt vermieden werden. Ein solcher Mangel kann insbesondere durch Verbrauch, durch plötzliche Undichtigkeiten oder durch den Ausfall einer Förderpumpe, welche die Entwicklerlösung aus einem größeren Vorratsgefäß in das Vorratsgefäß der Entwicklungseinrichtung pumpt, hervorgerufen werden.

Die Überwachung der Standhöhe in dem Vorratsgefäß der Entwicklungseinrichtung kann mittels eines Perlrohrs, eines Schwimmers oder einer optischen oder elektromagnetischen Vorrichtung vorgenommen werden. Diese bekannten Einrichtungen gewährleisten jedoch in dem vorliegenden Anwendungsfall keine zuverlässige Überwachung, da insbesondere durch das Einpumpen der Entwicklerlösung in das Vorratsgefäß eine Schaumbildung auftreten kann, durch welche die Standüberwachung gestört wird. Abgesehen davon sind bekannte Überwachungseinrichtungen insbesondere nach dem optischen und elektromagnetischen System vor allem dann aufwendig, wenn bei dem Über- oder Unterschreiten einer Anzahl von Standhöhen verschiedene Signale gebildet werden sollen.

Die Anordnung von vier voneinander getrennten Einzelelektroden mit Kontaktflächen in unterschiedlichen Höhen ist aus der US-A-3 605 798 bekannt.

Die Druckschrift US-A-3 461 722 beschreibt drei übereinander angeordnete Elektroden, von denen die untere Elektrode eine abgeschlossene Grundfläche ohne Metallseele innerhalb eines zylindrischen Elektrodenkörpers besitzt. Die Elektroden sind auf einer unteren bzw. oberen Röhre aufgeschraubt, wobei die mittlere Elektrode zwischen den Röhren festgeklemmt ist. Keine der Elektroden wird als Referenzelektrode verwendet, so daß sie auch nicht zusammen mit je einer der beiden übrigen Elektroden ein Schaltelement bilden kann, das mit einer Schaltungsanordnung verbunden ist, welche die Zufuhr von Entwicklerflüssigkeit in den Vorratsbehälter, die Betätigung optischer und/oder akustischer Überwachungselemente und das Abschalten kritischer Teile der Vorrichtung auslöst.

Aus der Druckschrift US-A-3 119 266 ist eine Elektrodenanordnung bekannt, die aus einer Meßelektrode und einer Schutzelektrode zur Verhinderung von Kriechströmen besteht. Die Schutzelektrode ist in einem bestimmten Abstand von der Kontaktfläche der Meßelektrode längs dem Umfang eines zylindrischen Teils angeordnet. Der zylindrische Teil ist mit einem Tank verbunden und unterstützt die Elektrodenanordnung, wobei die Meßelektrode ko-axial innerhalb des zylindrischen Teils verläuft. Zwischen der Meßelektrode und dem zylindrischen Teil ist eine entsprechende elektrische Isolation vorgesehen. Die Schutzelektrode unterbricht die elektrischen Kriechstrompfade zwischen der Meßelektrode und dem zylindrischen Teil längs der Oberfläche der Isolation. Diese Elektrodenanordnung besteht im Prinzip nur aus einer einzigen Elektrode, da die Schutzelektrode nicht zu Meßzwecken dient.

Der vorliegenden Erfindung liegt die Aufgabe zugrunde, eine Einrichtung zur elektrischen Standüberwachung einer Entwicklerlösung in einem Vorratsgefäß für die Entwicklung von Zweikomponenten-Diazotypiematerial nach dem Halbfeuchtverfahren derart weiterzubilden, daß trotz der Eigenart dieser Entwicklerlösung, zur Schaubildung zu neigen, eine zuverlässige Überwachung bei verhältnismäßig geringem Aufwand möglich wird.

Diese Aufgabe wird erfindungsgemäß dadurch gelöst, daß mehrere Elektroden zu einem Elektrodenkörper zusammengefaßt sind, der eine von einem elektrisch isolierenden Mantel eingeschlossene Metallseele aufweist, deren untere Endfläche elektrisch nicht isoliert ist und die Bezugselektrode bildet, daß die aus je einer der übrigen Kontaktelektroden und der Bezugselektrode gebildeten Schaltelemente an die Schaltungsanordnung angeschlossen sind, die so ausgebildet ist, daß bei Absinken des Flüssigkeitsspiegels der Entwicklerlösung unter die unterste wirksame Fläche der ersten, untersten Kontaktelektrode, die geringfügig über dem Ansaugniveau einer Tauchpumpe angeordnet ist, die Tauchpumpe und der Antriebsmotor für ein Walzenantragswerk der Entwicklerstation abgeschaltet werden, eine Preßrolle sowie eine Dosierlamelle des Walzenantragswerks entlastet werden und optische und/oder akustische Überwachungselemente eingeschaltet werden, daß bei Absinken des Flüssigkeitsspiegels der Entwicklerlösung unter die oberhalb der untersten wirksamen Fläche der ersten Kontaktelektrode angeordneten untersten wirksamen Fläche der zweiten Kontaktelektrode mittels eines Schaltglieds die optischen und/oder akustischen Überwachungselemente sowie eine zweite Pumpe eingeschaltet werden, die aus einem zweiten Vorratsbehälter Entwicklerlösung in den überwachten ersten Vorratsbehälter pumpt, und daß bei Ansteigen des Flüssigkeitsspiegels der Entwicklerlösung bis zur untersten wirksamen Fläche der dritten Kontaktelektrode, die oberhalb der untersten wirksamen Fläche der zweiten Kontaktelektrode angeordnet ist, die zweite Pumpe abgeschaltet wird.

Mit dieser Einrichtung wird in vorteilhafter Weise die Erkenntnis ausgenutzt, daß die Entwicklerlösung für die Entwicklung von Zweikomponenten-Diazotypiematerial nach dem Halbfeuchtverfahren eine genügend hohe elektrische Leitfähigkeit besitzt, um durch die Messung des elektrischen Widerstands, insbesondere des Ohmschen Widerstands, zwischen zwei in das Vorratsgefäß ragenden Elektroden, von denen die eine Elektrode eine Bezugselektrode bildet, eine Aussage über den Flüssigkeitsstand zu machen. Insbesondere tritt eine sprunghafte Änderung des zwischen zwei Elektroden meßbaren Widerstands dann ein, wenn die wirksamen Flächen dieser Elektroden in die Entwicklerlösung eintauchen oder aber wenn das Niveau der Entwicklerlösung unterhalb der Höhe wenigstens einer dieser aktiven Flächen fällt. Die charakteristische Änderung des Widerstands zwischen den Elektroden kann durch die Messung des Stromflusses zwischen diesen Elektroden ausgewertet werden. Hierzu sind die Elektroden an eine den Signal- oder Steuervorgang in Abhängigkeit von dem Widerstand zwischen den Elektroden auslösende elektrische Schaltungsanordnung angeschlossen.

In vorteilhafter Weise wird die Funktion dieser Einrichtung zur elektrischen Standüberwachung durch Schaumbildung auf der Oberfläche der Entwicklerlösung nicht beeinträchtigt. Ferner ist der Aufwand zur Herstellung dieser Einrichtung, die im wesentlichen nur die Elektroden, eine Stromquelle sowie einen Verstärker und gegebenenfalls einfache Schaltglieder erfordert, besonders wenig aufwendig. Eine solche Schaltungsanordnung, die den Signal- oder Steuervorgang in Abhängigkeit von dem Widerstand zwischen den Elektroden auslöst, wird weiter unten beschrieben.

In einer vorteilhaften Ausbildung der Entwicklerstation sind auf dem isolierenden Mantel ringförmige metallische Elektroden in unterschiedlichen Abständen zueinander angebracht, deren Oberflächen elektrisch nicht isoliert sind und deren untere Flächen die wirksamen Kontaktflächen mit der Entwicklerlösung bilden.

Von diesen Elektroden ist die unterste Elektrode, die stets in die Entwicklerlösung eintaucht, eine Bezugselektrode. Die über dieser Bezugselektrode in gestaffelter Höhe endenden drei anderen Elektroden können Steuer- und/oder Signalvorgänge in Abhängigkeit von dem Niveaustand auslösen.

Mit dieser Formgebung der Elektroden vereinfacht sich der Einbau in das Vorratsgefäß wesentlich, da nur ein einziger Körper in das Vorratsgefäß einzubringen ist. Die Anschlüsse zu den ringförmigen Elektroden sind gegeneinander isoliert aus dem Vorratsgefäß herausgeführt.

In Ausgestaltung der Erfindung ist ein Impulsgeber zum gepulsten Betrieb der optischen und/oder akustischen Überwachungselemente durch die zweite Kontaktelektrode einschaltbar.

Auf diese Weise kann vorteilhaft der Bedienungsperson angezeigt werden, daß nicht mehr der besonders kritische Flüssigkeitsstand unterhalb der untersten wirksamen Fläche der ersten Elektrode erreicht ist, sondern daß sich der Flüssigkeitsstand in dem weniger kritischen Bereich zwischen der untersten wirksamen Fläche der ersten Elektrode und der untersten wirksamen Fläche der zweiten Elektrode befindet.

Ferner ist die Entwicklerstation vorzugsweise mit mehreren Walzenantragswerken mit zugehörigen ersten Vorratsbehältern und einem diesen gemeinsamen zweiten Vorratsbehälter ausgerüstet, wobei durch die zweite und dritte Kontaktelektrode in jedem ersten Vorratsbehälter ein Magnetventil zur Versorgung dieses ersten Vorratbehälters mit Entwicklerlösung aus dem zweiten Vorratsbehälter gesteuert wird.

Dadurch läßt sich mit geringem Aufwand der Flüssigkeitsstand in den Vorratsbehältern meh-rerer Entwicklerstationen überwachen und steu-ern, und zwar mit Hilfe je eines Ventils, das jeder Entwicklerstation zugeordnet ist, und mit einem gemeinsamen zweiten größeren Vorratsbehälter, sowie einer gemeinsamen Pumpe zum Pumpen der Entwicklerlösung aus dem größeren Vorratsbehälter in diejenigen kleineren Vorratsbehälter der Entwicklerstationen, in denen der Stand der Entwicklerlösung unter ein kritisches Niveau gesunken ist.

In weiterer Ausgestaltung ist mit der ersten Kontaktelektrode eine Selbsthalteschaltung mit einem Relais und einem manuell betätigbaren Taster verbunden, dessen Betätigung die Tauchpumpe einschaltet, die Preßrolle und die Dosierlamelle belastet und die optischen und/oder akustischen Überwachungselemente ausschaltet.

Die Erfindung wird im folgenden anhand der Zeichnungen erläutert, in denen gleiche Teile mit übereinstimmenden Bezugszeichen versehen sind. Es zeigt

Fig. 1 eine schematische Anordnung der Entwicklerstation mit Walzenantragswerk und Vorratsbehälter,

Fig. 2 mehrere, zu einem gemeinsamen einstückigen Körper zusammengefaßte Elektroden,

Fig. 3 ein Ersatzschaltbild der Elektrodenanordnung nach Fig. 2 und

Fig. 4 eine elektrische Schaltungsanordnung in Verbindung mit den Elektroden in dem Vorratsbehälter.

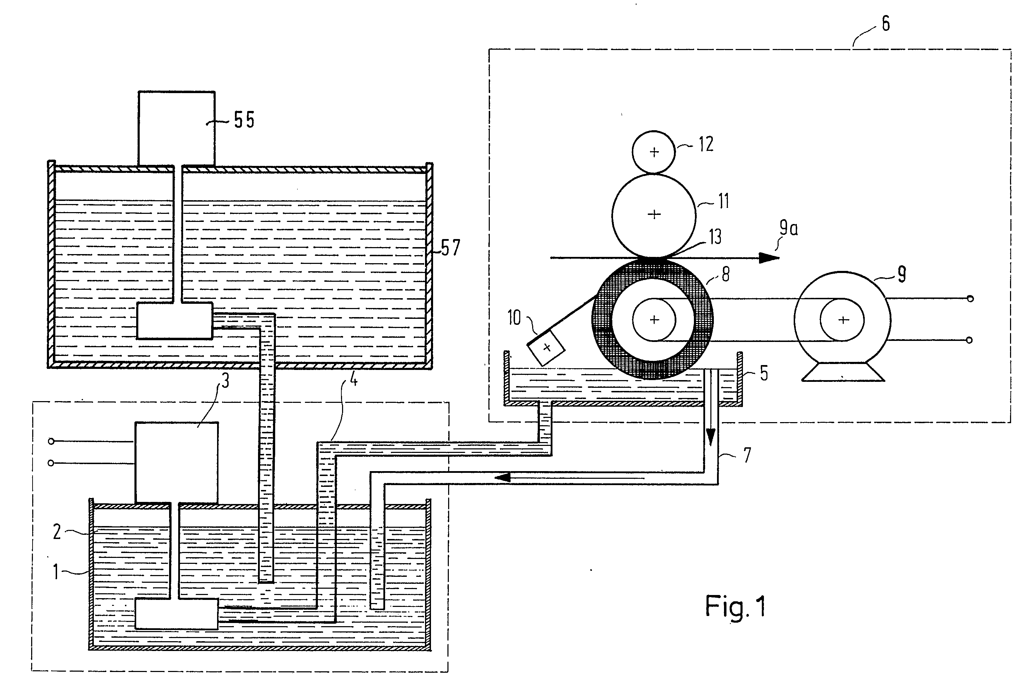

In Fig. 1 ist mit 1 ein Vorratsbehälter für Entwicklerlösung 2 bezeichnet, in dem der Stand bzw. das Niveau der Entwicklerlösung gesteuert und überwacht werden soll. In die Entwicklerlösung in dem Vorratsbehälter taucht eine elektromotorisch angetriebene Tauchpumpe 3 ein. Die Tauchpumpe steht über eine Förderleitung 4 mit einer Entwicklerlösung aufnehmenden Wanne 5 in Verbindung, die zu einem Walzenantragswerk 6 gehört. Das Walzenantragswerk 6 ist durch eine unterbrochene Umrandung in Fig. 1 eingeschlossen. Von der Wanne führt eine Überlaufleitung 7 in den Vorratsbehälter 1 zurück.

Das Walzenantragswerk 6 umfaßt eine in die Entwicklerlösung in der Wanne 5 eintauchende gummierte Antragswalze 8, die durch einen Antriebsmotor 9 angetrieben wird. An der Antragswalze liegt eine Dosierlamelle 10 zum Abstreifen überschüssiger Entwicklerlösung an. Gegen die Antragswalze wird eine Anpreßwalze 11 mittels einer Preßrolle 12 angedrückt. Zwischen der Antragswalze und der Anpreßwalze wird derart eine Entwicklerzone 13 gebildet, durch die das zu entwickelnde blattförmige Diazotypiematerial in Laufrichtung 9a transportiert wird.

Der Vorratsbehälter 1 wird von einer zweiten Tauchpumpe 55, die in einem gemeinsamen zweiten Vorratsbehälter 57 für mehrere der ersten Vorratsbehälter 1, falls eine Anzahl von Walzenantragswerken zum Einsatz kommt, angeordnet ist mit Entwicklerflüssigkeit beschickt.

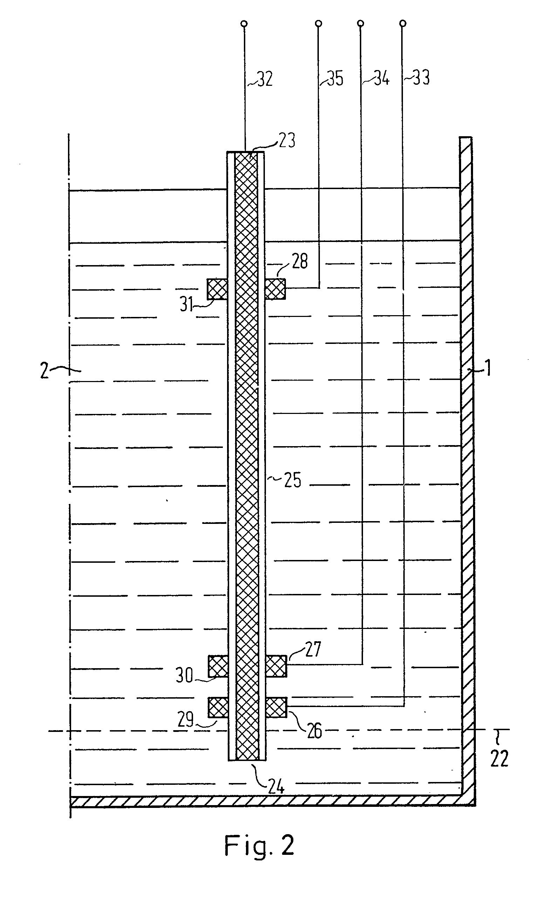

Fig. 2 zeigt eine Elektrodenanordnung, bei der sämtliche Elektroden einen einstückigen Körper bilden.

Im einzelnen weist dieser einstückige Körper eine Metallseele 23 auf, deren unterste Querschnittsfläche nicht isoliert ist und somit die unterste wirksame Meßfläche 24 der Bezugselektrode bildet. Die Metallseele 23 in Fig. 2 ist über ihren Umfang mit elektrisch isolierendem Material 25 überzogen. Auf dem Umfangsmaterial 25 sind in unterschiedlicher Höhe zur untersten wirksamen Fläche 24 drei ringförmige Elektroden 26, 27, 28 angebracht. Die Art der konzentrischen Anbringung geht im einzelnen aus Fig. 2 hervor.

Die ringförmigen Elektroden bestehen aus Metall. Ihre gesamte Oberfläche ist nicht isoliert, so daß jeweils die unterste wirksame Fläche 29, 30, 31 das Schaltniveau dieser Elektrode bildet.

Jede Elektrode ist mit einer Anschlußleitung 32, 33, 34, 35 ausgerüstet.

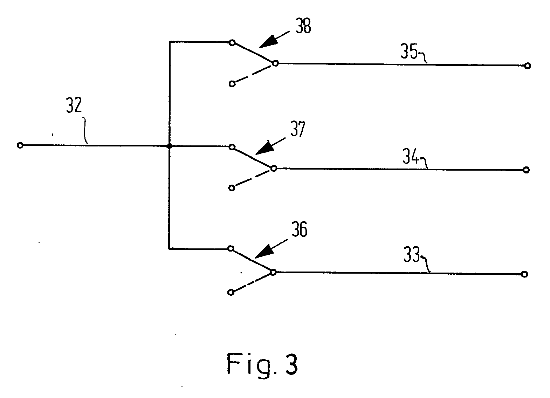

In Fig. 3 ist ein elektrisches Ersatzschaltbild der Elektrodenanordnung nach Fig. 2 dargestellt. Jede Elektrode 26, 27, 28 bildet in Verbindung mit der zugehörigen Bezugselektrode 24 ein Schaltelement 36, 37, 38, das geschlossen ist, sobald der Flüssigkeitsstand in dem Vorratsbehälter die unterste wirksame Fläche der jeweiligen Elektrode überschreitet.

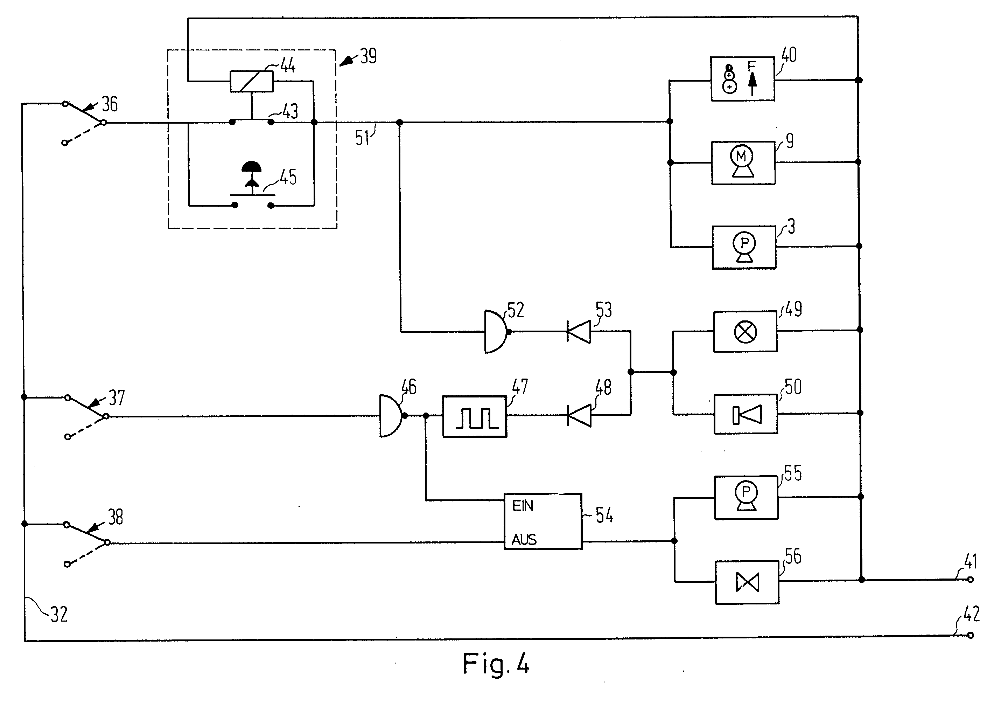

In Fig. 4 ist dargestellt, wie die durch die Elektroden gebildeten Schaltelemente an eine elektrische Schaltungsanordnung zur Steuerung der Zufuhr von Entwicklerflüssigkeit in den Vorratsbehälter sowie zum Außerbetriebsetzen der kritischen Teile der Einrichtung sowie zum Betätigen von optischen und/oder akustischen Überwachungselementen angeschlossen sind.

Sämtliche Kontakte in Fig. 4 sind in der Arbeitsstellung gezeichnet, wenn die Entwicklerflüssigkeit 2 das höchste Niveau in dem Vorratsgefäß 1 erreicht.

An das Schaltelement 36 sind über eine selbsthaltende Schaltungsanordnung 39, die innerhalb einer durchbrochenen Linie dargestellt ist, die Tauchpumpe 3, der Antriebsmotor 9 und eine Einrichtung 40 zur Walzenantragswerkentlastung angeschlossen. Bei geschlossenem Schaltelement 36 ist ein Stromkreis zwischen den Klemmen 41 und 42 geschlossen. Die selbsthaltende Schaltungsanordnung 39 umfaßt einen Schließer 43, der durch ein Relais 44 betätigbar ist. Das Relais ist parallel zu der Tauchpumpe, dem Antriebsmotor und der Einrichtung zur Walzenantragswerkentlastung geschaltet. Parallel zu dem Schließer 43 ist ein durch einen Taster manuell betätigbarer Kontakt 45 angeordnet.

Von dem Schaltelement 37 führt eine Leitung über ein Negationsglied 46, über einen Impulsgeber 47 und eine Entkoppelungsdiode 48 zu einem optischen Überwachungselement 49 und einem akustischen Überwachungselement 50. Zu diesen Überwachungselementen führt eine zusätzliche Verbindung von dem Ausgang 51 der selbsthaltenden Schaltungsanordnung über ein zweites Negationsglied 52 und eine zweite Entkoppelungsdiode 53.

Das dritte Schaltelement 38 ist an einen »Aus«-Eingang eines Schaltglieds 54 angeschlossen. Außerdem steht ein »Ein«-Eingang des Schaltgliedes mit dem Ausgang des Negationsglieds 46, das an das Schaltelement 37 angeschlossen ist, in Verbindung.

Von dem Ausgang des Schaltglieds 54 führen Leitungen zu der zweiten Pumpe 55, welche dazu eingerichtet ist, von dem größeren gemeinsamen Vorratsgefäß 57 Entwicklerlösung in das Vorratsgefäß 1 zu pumpen. Außerdem ist an den Ausgang des Schaltglieds 54 ein Ventil 56 angeschlossen, das in die Flüssigkeitsleitung dieser Pumpe eingeschaltet ist. In die Flüssigkeitsleitung der Pumpe 55 können weitere, nicht dargestellte Ventile eingefügt sein, die durch gleiche oder ähnliche Schaltungsanordnungen wie in Fig. 4 betätigt werden und die weiteren Entwicklungsvorrichtungen zugeordnet sind.

Die Schaltungsanordnung nach Fig. 4 arbeitet folgendermaßen:

Wenn das Niveau der Entwicklerflüssigkeit in dem Vorratsgefäß 1 unter einen Stand absinkt, der das Schaltelement 36 öffnet, wobei sich das Niveau unterhalb der untersten wirksamen Fläche 29 in Fig. 2 befindet, werden der Antriebsmotor 9 und die Tauchpumpe 3 abgeschaltet, da die Gefahr eines Trockenlaufs des Walzenantragswerks besteht. Außerdem wird durch die Einrichtung 40 zur Walzenantragswerkentlastung die Antragswalze von dem Preßdruck der Anpreßwalze und der Preßrolle entlastet. Gleichzeitig wird die Antragswalze von der statischen Belastung der Dosierlamelle entlastet. In diesem Zustand wirkt die Schaltungsanordnung selbsthaltend, da das Relais 44 entregt ist und der Schließer 43 deswegen geöffnet ist. Der stromlose Zustand des Ausgangs 51 der selbsthaltenden Schaltungsanordnung 39 wird über das zweite Negationsglied 52 und die zweite Entkoppelungsdiode 53 zur Aktivierung des optischen Überwachungselements 49 und des akustischen Überwachungselements 50 genutzt. Der selbsthaltende Zustand kann nur durch manuellen Eingriff über den Taster, der den Kontakt 45 betätigt, aufgehoben werden. Diese Maßnahme ist vorgesehen, um Störungen, die zu einem Absinken des Entwicklungslösungsstands in dem Vorratsbehälter 1 in die Nähe des Ansaugniveaus 22 führen, nachprüfen zu können.

Unterschreitet der Flüssigkeitsstand der Entwicklerlösung in dem Vorratsbehälter 1 nur das Niveau der untersten wirksamen Fläche 30 in Fig. 2, so öffnet das Schaltelement 37, und durch das Negationsglied 46 wird der Impulsgeber 47 in Gang gesetzt, der über die Entkoppelungsdiode 48 einen impulsweisen Betrieb des optischen Überwachungselements 49 und des akustischen Überwachungselements 50 hervorruft. Damit wird signalisiert, daß die Entwicklerlösung in dem Vorratsbehälter einen bestimmten Stand unterschreitet, der jedoch noch nicht so kritisch ist wie das Unterschreiten des Niveaus, das zu einem Öffnen des Schaltelements 36 führt. Letzterer Betriebsfall wird durch ein ununterbrochenes optisches und akustisches Signal angezeigt. Fällt also das Niveau lediglich unter die unterste wirksame Fläche 30, so wird über den »Ein«-Eingang des Schaltglieds 54 auch die zweite Pumpe 55 in Betrieb genommen und das Ventil 56 geöffnet, wodurch frische Entwicklerlösung aus dem größeren Vorratsbehälter 57 in den Vorratsbehälter 1 gepumpt wird.

Dieses Einpumpen frischer Entwicklerlösung in den Vorratsbehälter 1 wird abgeschlossen, sobald der Flüssigkeitsstand der Entwicklerlösung 2 in dem Vorratsbehälter 1 die wirksame Fläche 31 in Fig. 2 erreicht, wodurch bei

geschlossenem Schaltelement 38 der »Aus«-Eingang des Schaltglieds 54 wirksam wird, der die Pumpe 55 abschaltet und das Ventil 56 schließt.

Zum Betrieb der elektrischen Schaltungsanordnung nach Fig. 4 können zwischen den Elektroden bzw. den sie ersatzweise darstellenden Schaltelementen 36, 37, 38 und der übrigen Schaltungsanordnung zusätzliche Verstärkungsglieder eingeschaltet sein, um die beschriebenen Vorgänge mit der erforderlichen Energie bewirken zu können.

In der beschriebenen Weise wird durch eine wenig aufwendige und insbesondere auch bei Schaumbildung betriebssichere Elektrodenanordnung die gesamte Vorrichtung selbsttätig gesteuert. Die Elektrodenanordnung eignet sich besonders zum Betrieb mit Entwicklerlösung auf wäßriger Basis mit einem oder mehreren alkalischen Bestandteilen und einem Netzmittel.

## Patentansprüche

1. Entwicklerstation für Zweikomponenten-Diazotypiematerial, das nach dem Halbfeuchtverfahren entwickelt wird, mit einer Vorrichtung zur elektrischen Überwachung des Entwicklerlösungsstandes in einem Vorratsbehälter, mit zumindest zwei Elektroden innerhalb des Vorratsbehälters, welche je eine wirksame Kontaktfläche aufweisen, von denen zumindest eine auf einer einen Signal- und/oder Steuervorgang auslösenden Höhe des Entwicklerniveaus liegt und die mit der anderen Elektrode, die eine Bezugselektrode ist, ein Schaltelement bildet, das an eine elektrische Schaltungsanordnung angeschlossen ist und zusammen mit dieser die Betätigung optischer Überwachungselemente und das Steuern von Teilen der Entwicklerstation auslöst, dadurch gekennzeichnet, daß mehrere Elektroden (24, 26, 27, 28) zu einem Elektrodenkörper zusammengefaßt sind, der eine von einem elektrisch isolierenden Mantel eingeschlossene Metallseele (23) aufweist, deren untere Endfläche elektrisch nicht isoliert ist und die Bezugselektrode (24) bildet, daß die aus je einer der übrigen Kontaktelektroden (26, 27, 28) und der Bezugselektrode (24) gebildeten Schaltelemente (36, 37, 38) an die Schaltungsanordnung angeschlossen sind, die so ausgebildet ist, daß bei Ansinken des Flüssigkeitsspiegels der Entwicklerlösung unter die unterste wirksame Fläche (29) der ersten, untersten Kontaktelektrode (26), die geringfügig über dem Ansaugniveau (22) einer Tauchpumpe (3) angeordnet ist, die Tauchpumpe und der Antriebsmotor (9) für ein Walzenantragswerk (6) der Entwicklerstation abgeschaltet werden, eine Preßrolle (12) sowie eine Dosierlamelle (10) des Walzenantragswerks (6) entlastet werden und optische und/oder akustische Überwachungselemente (49, 50) eingeschaltet werden, daß bei Absinken des Flüssigkeitsspiegels der Entwicklerlösung unter die oberhalb der untersten wirksamen Fläche (29) der ersten Kontaktelektrode (26) angeordneten untersten wirksamen Fläche (30) der zweiten Kontaktelektrode (27) mittels eines Schaltglieds (54) die optischen und/oder akustischen Überwachungselemente (49, 50) sowie eine zweite Pumpe (55) eingeschaltet werden, die aus einem zweiten Vorratsbehälter Entwicklerlösung in den überwachten ersten Vorratsbehälter (1) pumpt, und daß bei Ansteigen des Flüssigkeitsspiegels der Entwicklerlösung bis zur untersten wirksamen Fläche (31) der dritten Kontaktelektrode (28), die oberhalb der untersten wirksamen Fläche (30) der zweiten Kontaktelektrode (27) angeordnet ist, die zweite Pumpe (55) abgeschaltet wird.

2. Entwicklerstation nach Anspruch 1, dadurch gekennzeichnet, daß auf dem isolierenden Mantel (25) ringförmige metallische Elektroden (26, 27, 28) in unterschiedlichen Abständen zueinander angebracht sind, deren Oberflächen elektrisch nicht isoliert sind und deren untere Flächen (29, 30, 31) die wirksamen Kontaktflächen mit der Entwicklerlösung bilden.

3. Entwicklerstation nach Anspruch 1, dadurch gekennzeichnet, daß durch die zweite Kontaktelektrode (27) ein Impulsgeber (47) zum gepulsten Betrieb der optischen und/oder akustischen Überwachungselemente (49, 50) einschaltbar ist.

4. Entwicklerstation nach Anspruch 1, mit mehreren Walzenantragswerken mit zugehörigen ersten Vorratsbehältern und einem diesen gemeinsamen zweiten Vorratsbehälter, dadurch gekennzeichnet, daß durch die zweite und dritte Kontaktelektrode (27, 28) in jedem ersten Vorratsbehälter ein Magnetventil (56) zur Versorgung dieses ersten Vorratsbehälters mit Entwicklerlösung aus dem zweiten Vorratsbehälter gesteuert wird.

5. Entwicklerstation nach Anspruch 1, dadurch gekennzeichnet, daß mit der ersten Kontaktelektrode (26) eine Selbsthalteschaltung (39) mit einem Relais (44) und einem manuell betätigbaren Taster (45) verbunden ist, dessen Betätigung die Tauchpumpe (3) einschaltet, die Preßrolle (12) und die Dosierlamelle (10) belastet und die optischen und/oder akustischen Überwachungselemente (49, 50) ausschaltet.

## Claims

1. Development station for a two-component diazotype material which is developed according to the semi-dry process, comprising an apparatus for the electric monitoring the level of a developing solution contained in a storage tank comprising at least two electrodes positioned inside the storage tank, each of which has an active contact surface, at least one of the electrodes having its active contact surface positioned at a level height of the developing solution at which a signalling and/or control action is started, and is constituting with the other electrode, which is serving as a reference electrode, a switching element, which is connected to an electric switching arrangement and together with this arrangement is triggering the operation action of optical control elements and the control of parts of the development station, wherein several electrodes (24, 26, 27, 28) are combined to an electrode body, which has a metal core (23) imbedded in an electrically insulating cover, the lower end surface of the metal core is not electrically insulated and is forming the reference electrode (24), wherein the switching elements (36, 37, 38) comprising each of the remaining contact electrodes (26, 27, 28) and the reference electrode (24) are connected to the switching arrangement, which is operating in such a manner that an immersion pump (3) and a driving motor (9) for a roll-application means of the developing station are stopped, if the level of the development solution falls below the lowest active surface (29) of the first, lowest contact electrode (26) which is arranged slightly above the suction level (22) of the immersion pump (3), a back-up roller (12) and a metering blade (10) of the roll-application means (6) are relieved of load and optical and/or acoustic control elements (49, 50) are switched on, that the optical and/or acoustic control elements (49, 50) and a second pump (55), pumping development solution from a second supply container into the monitored first storage tank (1), are switched on by means of a switch member (54), if the level of the development solution falls below the lowest active surface (30) of the second contact electrode (27) which is arranged above the lowest active surface (29) of the first contact electrode (27) and that the second pump (55) is switched off, if the level of the developing solution reaches the lowest active surface (31) of the third contact electrode (28), which is arranged above the lowest active surface (30) of the second contact electrode (27).

2. Development station as claimed in claim 1, wherein annular metallic electrodes (26, 27, 28), the surfaces of which are not electrically insulated, are mounted on the insulating cover (25), in different distances to each other, and the lower surfaces (29, 30, 31) of the electrodes are constituting the active contact surfaces with the development solution.

3. Development station as claimed in claim 1, wherein a pulse generator (47) for the pulsed operation of the optical and/or acoustic control elements (49, 50) is switched on by the second contact electrode (27).

4. Development station as claimed in claim 1, with several roll-application means with accompanying first storage tanks and one common second storage tank for the first storage tanks, wherein in each first storage tank a magnetic valve (56) for supplying of the first storage tanks with development solution from the second storage tank is controlled by the second and third contact electrodes (27, 28).

5. Development station as claimed in claim 1, wherein a selfholding switching circuit (39) comprising a relais (44) and a manually actuable push-button (45) is connected to the first contact electrode (26), so that by actuating of the push-button the immersion pump (3) is switched on, the back-up roller (12) and the metering blade (10) are headed and the optical and/or acoustic control elements (49, 50) are switched off.

**Revendications**

1. Station de développement d'un matérial de diazoty pie à deux composants par le procédé semi-humide, comportant un dispositif assurant le contrôle électrique du niveau de la solution de développement dans un réservoir d'alimentation recevant au moins deux électrodes, dotées chacune d'une surface active dont l'une au moins, qui est placée à un point déterminé, à la hauteur duquel le niveau du liquide révélateur déclenche un signal et/ou un processus de commande, forme avec la deuxième électrode, qui est une électrode de comparaison, un élément de commutation qui est relié à un dispositif de commande électrique, et qui, en coordination avec ce dernier, assure le contrôle de fonctionnement des éléments de surveillance optiques et la commande de certains éléments de la station de développement, cette station de développement étant caractérisée en ce que plusieurs électrodes (24, 26, 27, 28) sont regroupées dans un même corps d'électrodes comportant une âme métallique (23), qui est pourvue d'un revêtement en matériau isolant électrique et dont la surface extrême inférieure ne porte pas d'isolation électrique et constitue l'électrode de comparaison (24), en ce que chaque élément de commutation (36, 37, 38), constitué de l'une des autres électrodes de contact (26, 27, 28) et de l'électrode de comparaison (24) est relié au dispositif de commande, qui est constitué de manière que la baisse du niveau de la solution de développement au-dessous de la surface active inférieure (29) de la première électrode de contact inférieure (26), qui est placée légèrement au-dessus du niveau d'aspiration (22) d'une pompe immergée (3), provoque la déconnexion de cette pompe (3) et du moteur d'entraînement (9) d'un groupe de cylindres d'application (6) de la station de développement, d'une part, dégage le rouleau d'appui (12) et la lamelle de dosage (10) du groupe de cylindres d'application (6), et assure la mise en marche d'éléments de surveillance optiques et/ou acoustiques, d'autre part, en ce que la baisse du niveau de la solution de développement au-dessous de la surface active (30) de la deuxième électrode de contact (27), placée à une certaine distance au-dessus de la surface active inférieure (29) de la première électrode de contact (26), provoque, par l'intermédiaire d'un élément de commutation (54), la mise en marche des éléments optiques et/ou acoustiques (49, 50), ainsi que d'une deuxième pompe (55), qui aspire la solution de développement dans un deuxième réservoir d'alimentation pour la diriger dans le premier réservoir surveillé (1), et en ce que la montée du niveau de la solution de développement jusqu'à la hauteur de la surface active inférieure (31) de la troisième électrode de contact (28), placée à une certaine distance au-dessus de la surface active inférieure (30) de la deuxième électrode de contact (27), provoque l'arrêt de la deuxième pompe (55).

2. Station de développement selon la revendication 1, caractérisée en ce que le revêtement isolant (25) est muni, à des intervalles irréguliers, d'électrodes métalliques annulaires (26, 27, 28) dont les faces supérieures ne portent aucune isolation électrique, et dont les faces inférieures (29, 30, 31) constituent les surfaces actives (29, 30, 31) au contact avec la solution de développement.

3. Station de développement selon la revendication 1, caractérisée en ce qu'un générateur d'impulsions (47), excité par la deuxième électrode de contact (27), provoque le fonctionnement en mode pulsé des éléments de contrôle optiques et/ou acoustiques (49, 50).

4. Station de développement selon la revendication 1, équipée de plusieurs groupes de cylindres d'application reliés chacun à un premier réservoir d'alimentation commun, caractérisée en ce que les deuxième et troisième électrodes de contact (27, 28) commandent, dans chacun des premiers réservoirs d'alimentation, une soupape magnétique (56) qui contrôle l'approvisionnement en liquide de développement de ce premier réservoir, à partir du deuxième réservoir commun.

5. Station de développement selon la revendication 1, caractérisée en ce que la première électrode de contact (26) est reliée à un circuit de blocage (39) équipé d'un relais (44) et d'une touche manuelle (45), permettant d'enclencher la pompe immergée (3), d'appliquer le rouleau d'appui (12) et la lamelle de dosage (10), et de déconnecter les éléments de surveillance optique et/ou acoustique (49, 50).

Fig. 1

Fig. 2

Fig. 3

EIN

AUS

Fig. 4